# EUROPÄISCHE PATENTANMELDUNG

(11) **EP 1 903 371 A1**
(43) Veröffentlichungstag der Anmeldung: **26.03.2008**
(21) Anmeldenummer: 07014461.3
(22) Anmeldetag: 24.07.2007
(51) Int. Cl.: G02B 26/10, G02B 27/22, G09F 19/18, H04N 13/00

(54) **Laservorrichtung zur Erzeugung dreidimensionaler Lichtobjekte in einem ein Streumedium enthaltenden Volumen**

(30) Priorität: 23.09.2006 DE 102006044989
(71) Anmelder: Arctos Showlasertechnik e.K., 83416 Saaldorf-Surheim (DE)
(72) Erfinder: Hafner, Thomas, 83416 Saaldorf-Surheim (DE)
(74) Vertreter: Hofmann, Matthias

(57) **Zusammenfassung**

Eine Laservorrichtung (1) zur Erzeugung dreidimensionaler Lichtobjekte in einem ein Streumedium enthaltenden Volumen hat eine Laserlichtquelle (4), die ein Lichtbündel (5) sichtbaren Lichts ausgibt. Ein erstes Umlenkelement (6) ist um eine Rotationsachse (8) drehantreibbar, die eine optische Umlenkfläche (9) des ersten Umlenkelements (6) durchtritt. Dieses ist so angeordnet, dass die Rotationsachse (8) mit der Strahlrichtung eines Einfall-Bündelabschnitts (7) zusammenfällt, welches auf das erste Umlenkelement (6) trifft. Mindestens ein zweites Umlenkelement (10a, 10b) ist beabstandet zur Rotationsachse (8) so angeordnet, dass es mit mindestens einem Umlenk-Bündelabschnitt (11) beaufschlagbar ist, welcher vom ersten Umlenkelement (6) zur Erzeugung eines Ausgabe-Bündelabschnitts zur Erzeugung des 3D-Objektes umgelenkt wird. Das zweite Umlenkelement (10a, 10b) hat eine mit einer Steuereinrichtung (30) zusammenarbeitende Scan-Einrichtung (35), mittels der das zweite Umlenkelement (10a, 10b) oszillierend um mindestens eine erste Kippachse (x', y') verkippbar ist. Es resultiert eine Laservorrichtung, bei der eine effektvolle Erzeugung dreidimensionaler Lichtobjekte mit geringem konstruktiven Aufwand gegeben ist.

## Beschreibung

Die Erfindung betrifft eine Laservorrichtung zur Erzeugung dreidimensionaler Lichtobjekte in einem ein Streumedium enthaltenden Volumen.

Derartige Laservorrichtungen sind durch offenkundige Vorbenutzung bekannt. Derartige Laservorrichtungen sind entweder konstruktiv sehr auf wändig oder effektarm.

Es ist eine Aufgabe der vorliegenden Erfindung, eine effektvolle Erzeugung dreidimensionaler Lichtobjekte mit geringem konstruktiven Aufwand zu schaffen.

Diese Aufgabe ist erfindungsgemäß gelöst mit einer Laservorrichtung mit den im Anspruch 1 angegebenen Merkmalen.

Mit der erfindungsgemäßen Laservorrichtung lässt sich bei einfachstem Aufbau ein dreidimensionaler Doppelkonus mit veränderlichem Konuswinkel erzeugen. Hierdurch lassen sich reizvolle dreidimensionale Effekte erzeugen, die insbesondere in der Showlasertechnik zum Einsatz kommen können. Bei dem Streumedium kann es sich insbesondere um Luft handeln. Auch ein Nebel oder ein Rauch sind als Streumedium möglich.

Eine Anordnung der Umlenkspiegel nach Anspruch 2 führt zu einem besonders einfachen mechanischen Aufbau der Laservorrichtung.

Eine Durchgangsöffnung nach Anspruch 3 ermöglicht es, die Lichtbündelerzeugung auf der vom erzeugten Lichtobjekt abgewandten Seite der Tragscheibe anzuordnen, so dass die Tragscheibe gleichzeitig der Abschirmung der Laserlichtquelle dient. Zudem ist dann eine unerwünschte Abschattung der erzeugten dreidimensionalen Lichtobjekte durch die Laserlichtquelle vermieden.

Zwei zweite Umlenkelemente nach Anspruch 4 ermöglichen einen gut ausgewuchteten Betrieb einer rotierenden Anordnung mit den zweiten Umlenkspiegeln, ohne dass es notwendig ist, zusätzliche Wuchtgewichte einzusetzen. Auch ausgewuchtete Anordnungen von mehr als zwei zweiten Umlenkspiegeln, die alle vom entsprechend mit einer zugeordneten Mehrzahl von Umlenkflächen ausgerüsteten ersten Umlenkelement beaufschlagt werden, sind möglich.

Zwei Scan-Einrichtungen pro zweitem Umlenkspiegel, d. h. die Möglichkeit, den zweiten Umlenkspiegel nicht nur um eine, sondern um zwei Scanachsen zu verkippen, vergrößern die Möglichkeiten, dreidimensionale Lichtobjekte zu erzeugen, erheblich, da ein komplett unabhängiger zusätzlicher Freiheitsgrad zur Verfügung steht. Die beiden Kippachsen schließen bevorzugt einen Winkel von 90° zueinander ein.

Ein Positionsaufnehmer nach Anspruch 6 ermöglicht eine genaue Lagevorgabe des erzeugten Lichtobjekts. Die Scanbewegungen des mindestens einen zweiten Umlenkspiegels können mit seiner Rotationsgeschwindigkeit um die Rotationsachse sowie mit der Momentanposition des mindestens einen zweiten Umlenkspiegels abgeglichen und insbesondere synchronisiert werden.

Eine Anordnung des Positionsabnehmers nach Anspruch 7 ist konstruktiv besonders unaufwändig.

Mit einer Ausgestaltung der Steuereinrichtung nach den Ansprüchen 8 und 9 lassen sich insbesondere stehende bzw. sich vorgegeben langsam veränderbare dreidimensionale Lichtobjekte erzeugen. Bei stehendem Lichtobjekt ist der vorgegebene Abweichungs-Sollwert Null.

Ausführungsbeispiele der Erfindung werden nachfolgend anhand der Zeichnung näher erläutert. In dieser zeigen:
- Fig. 1: eine erste Ausführungsform einer Laservorrichtung zur Erzeugung dreidimensionaler Objekte in einem ein Streumedium enthaltenden Volumen;
- Fig. 2: eine weitere Ausführungsform einer Laservorrichtung; und
- Fig. 3: eine Seitenansicht aus der Blickrichtung III in Fig. 2.

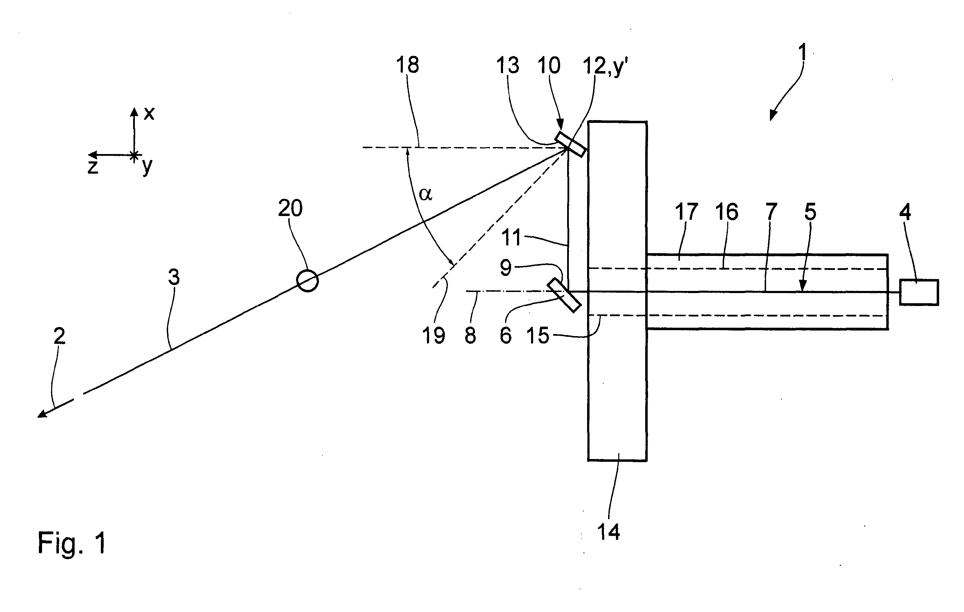

Fig. 1 zeigt schematisch eine erste Ausführungsform einer Laservorrichtung 1 zur Erzeugung dreidimensionaler Lichtobjekte in einem ein Streumedium enthaltenden Volumen bzw. Raum. Die dreidimensionalen Objekte entstehen durch Streuung eines sich quer zu einer Ausgabestrahlrichtung 2 bewegenden Ausgabe-Bündelabschnitts 3 am Streumedium, bei dem es sich um Luft oder um einen streuenden Nebel oder Rauch handeln kann.

Eine Laserlichtquelle 4 der Laservorrichtung 1 gibt ein Lichtbündel 5 sichtbaren Lichts aus. Im Beispiel der Laservorrichtung 1 nach Fig. 1 ist das Lichtbündel 5 grünes Licht, welches beispielsweise durch Frequenzverdopplung eines Nd-Lasers erzeugt wurde. Bei der Laserlichtquelle 4 handelt es sich insbesondere um einen Festkörperlaser, zum Beispiel um einen diodengepumpten Festkörperlaser. Die Laserlichtquelle 4 kann auch so ausgebildet sein, dass sie in der Lage ist, die drei Grundfarben des sichtbaren Spektrums, rot, grün und blau, zu erzeugen und diese Farben nach Bedarf additiv zu allen möglichen sichtbaren Farben zu mischen.

Ein auf einen ersten Umlenkspiegel 6 als Beispiel für ein erstes Umlenkelement treffender Bündelabschnitt 7 des Lichtbündels wird nachfolgend auch als Einfall-Bündelabschnitt bezeichnet. Der erste Umlenkspiegel 6 ist um eine Rotationsachse 8 durch einen in der Fig. 1 nicht dargestellten Antrieb drehantreibbar. Die Rotationsachse 8 verläuft parallel zur z-Achse eines in der Fig. 1 dargestellten kartesischen xyz-Koordinatensystems. Die z-Achse verläuft in der Fig. 1 nach links, die x-Achse nach oben und die y-Achse in die Zeichenebene hinein. Die Rotationsachse 8 durchtritt eine optische Umlenkfläche 9 des ersten Umlenkspiegels 6 und fällt mit einer Strahlrichtung des Einfall-Bündelabschnitts 7 zusammen. Der Einfallwinkel des Einfall-Bündelabschnitts 7 auf die Umlenkfläche 9 beträgt 45 °.

Auch andere Umlenkelemente als Umlenkspiegel sind möglich, zum Beispiel Umlenkprismen.

Beanstandet zur Rotationsachse 8 ist ein zweiter Umlenkspiegel 10 angeordnet. Dieser wird mit einem Umlenk-Bündelabschnitt 11 beaufschlagt, das vom ersten Umlenkspiegel 6 zur Erzeugung des Ausgabe-Bündelabschnitts 3 zur Erzeugung des 3D-Lichtobjektes umgelenkt wird.

Der zweite Umlenkspiegel 10 hat eine mit einer in der Fig. 1 nicht dargestellten Steuereinrichtung zusammenarbeitende und ebenfalls nicht dargestellte Scan-Einrichtung. Mit dieser ist der zweite Umlenkspiegel 10 oszillierend um eine erste Kippachse y' verkippbar, die in der in Fig. 1 dargestellten Momentanposition des zweiten Umlenkspiegels 10 parallel zur y-Achse verläuft und auf der ein Auftreffpunkt 12 des Umlenk-Bündelabschnitts 11 auf einer Umlenkfläche 13 des zweiten Umlenkspiegels 10 liegt. Der Einfallswinkel des Umlenk-Bündelabschnitts 11 auf der Umlenkfläche 13 ist kleiner als 45 ° und über die Scan-Einrichtung einstellbar. In der in der Fig. 1 dargestellten Momentanposition des zweiten Umlenkspiegels 10 beträgt der Einfallswinkel etwa 32 °.

Die beiden Umlenkspiegel 6, 10 sind auf einer mit Hilfe eines nicht dargestellten Antriebs drehantreibbaren Tragscheibe 14 angeordnet, deren Rotationssymmetrieachse mit der Rotationsachse 8 zusammenfällt. Die Tragscheibe 14 hat eine zentrale Durchgangsöffnung 15. Letztere fluchtet mit einer Durchgangsöffnung 16 eines vom ersten Umlenkspiegel 6 abgewandt auf die Tragscheibe 14 zentral aufgesetzten Führungsrohrs 17, durch welches der Einfall-Bündelabschnitt 7 geführt ist.

Aufgrund der Scan-Bewegung des zweiten Umlenkspiegels 10 kann der Ausgabe-Bündelabschnitt 3 über einen Winkelbereich α zwischen Strahlrichtungen 18, 19 umgelenkt werden, die in der Fig. 1 gestrichelt angedeutet sind. Beim Betrieb der Laservorrichtung 1 wird aufgrund der Rotation der Tragscheibe 14 mit den darauf festgelegten Umlenkspiegeln 6, 10 bei der dargestellten Winkelstellung des zweiten Umlenkspiegels 10 ein Doppelkonus erzeugt, dessen kreisförmige Basis durch den rotierenden Auf treffpunkt 12 des Umlenk-Bündelabschnitts 11 auf die Umlenkfläche 13 des zweiten Umlenkspiegels 10 vorgegeben wird und der im Bereich 20, also in der Verlängerung der Rotationsachse 8 in das Volumen, in welchem das 3D-Lichtobjekt erzeugt wird, eine Einschnürung aufweist. Durch Variation des Umlenkwinkels durch Scannen des zweiten Umlenkspiegels 10 um die y'-Achse innerhalb des Winkelbereichs α wird der Konuswinkel des erzeugten Doppelkonus und der Abstand der Einschnürung 20 vom ersten Umlenkspiegel 6 variiert. Ausgehend von der Basis wird der Doppelkonus erzeugt, so lange das Streumedium den Ausgabe-Bündelabschnitt 3 streut. Auf diese Weise kann in Bezug auf eine Spiegelebene, in der die Einschnürung 20 liegt, und auf der die Rotationsachse 8 senkrecht steht, ein symmetrischer oder auch ein asymmetrischer Doppelkonus erzeugt werden.

Durch Zusammenwirken verschiedener Antriebsgeschwindigkeiten des Motors 27 und damit verschiedener Drehzahlen der Tragscheibe 14 mit entsprechenden Ansteuerungen des y-Scanners des Umlenkspiegels 10 lassen sich reizvolle 3D-Effekte erzielen.

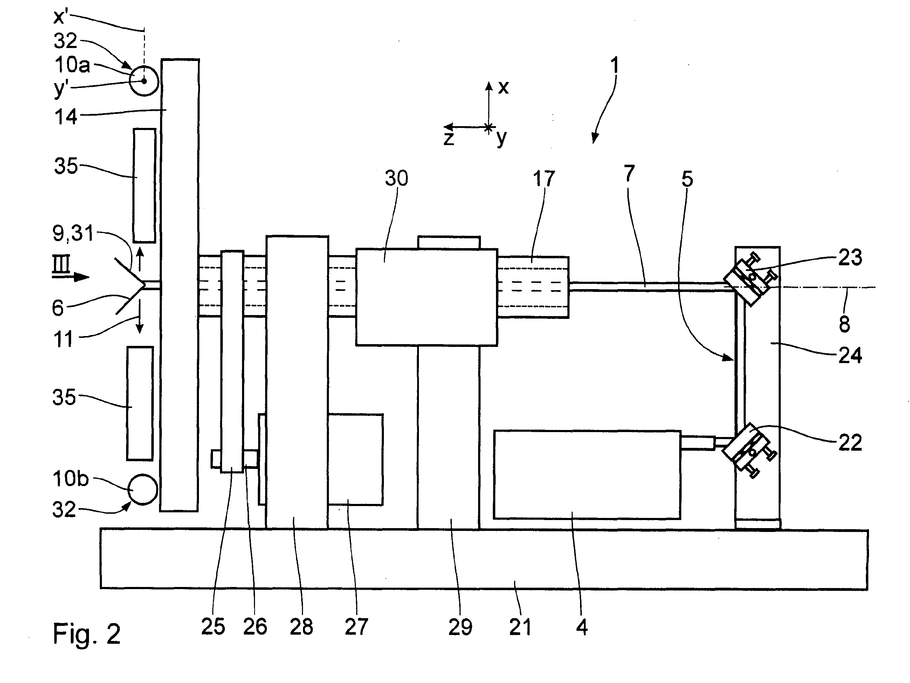

Fig. 2 zeigt schematisch eine weitere Ausführungsform einer Laservorrichtung 1 zur Erzeugung dreidimensionaler Objekte in einem ein Streumedium enthaltenden Volumen. Komponenten, die denjenigen entsprechen, die vorstehend schon unter Bezugnahme auf die Fig. 1 erläutert wurden, tragen die gleichen Bezugsziffern und werden nicht nochmals im Einzelnen diskutiert.

Die Laserlichtquelle 4 ist bei der Ausführung nach Fig. 2 auf einer unterhalb der Tragscheibe 14 und des Führungsrohrs 17 angeordneten Basisplatte 21 angeordnet. Das von der Laserlichtquelle 4 nach Fig. 2 ausgegebene Lichtbündel 5 wird zunächst durch zwei Vor-Umlenkspiegel 22, 23, die von einem fest mit der Basisplatte 21 verbundenen Ständer 24 getragen werden, jeweils um 90° umgelenkt. Auf diese Weise wird der Einfall-Bündelabschnitt 7 erzeugt. Durch die Vor-Umlenkspiegel 22, 23 kann der Einfall-Bündelabschnitt 7 in Punkt und Richtung exakt justiert werden.

Der Rotationsantrieb der Tragscheibe 14 um die Rotationsachse 8 erfolgt bei der Ausführung nach Fig. 2 über einen Riemen 25, der einerseits das Führungsrohr 17 und andererseits eine Antriebswelle 26 eines Antriebsmotors 27 umschlingt. Das Führungsrohr 17 ist bei der Ausführung nach Fig. 2 drehfest mit der Tragscheibe 14 verbunden. Das Führungsrohr 17 und der Antriebsmotor 27 werden von einem weiteren Ständer 28 getragen. Zusätzlich wird das Führungsrohr 17 noch von einem weiteren Ständer 29 getragen. Das Führungsrohr 17 ist in den Ständern 28, 29 axial/radial gelagert. Vom Ständer 29 wird weiterhin eine Erfassungs-/Steuereinheit 30 getragen. Diese hat einen nicht näher dargestellten Positionsaufnehmer, der mit einer Steuereinrichtung der Erfassungs-/Steuereineinheit 30 zur Ermittlung der Drehwinkelposition des Führungsrohrs 17 im Lager des Ständers 29 und damit zur Ermittlung der Winkelposition der Tragscheibe 14 und darauf angeordneten Umlenkspiegel dient. Der Positionsaufnehmer kann als induktiver oder als optischer Positionsaufnehmer ausgeführt sein.

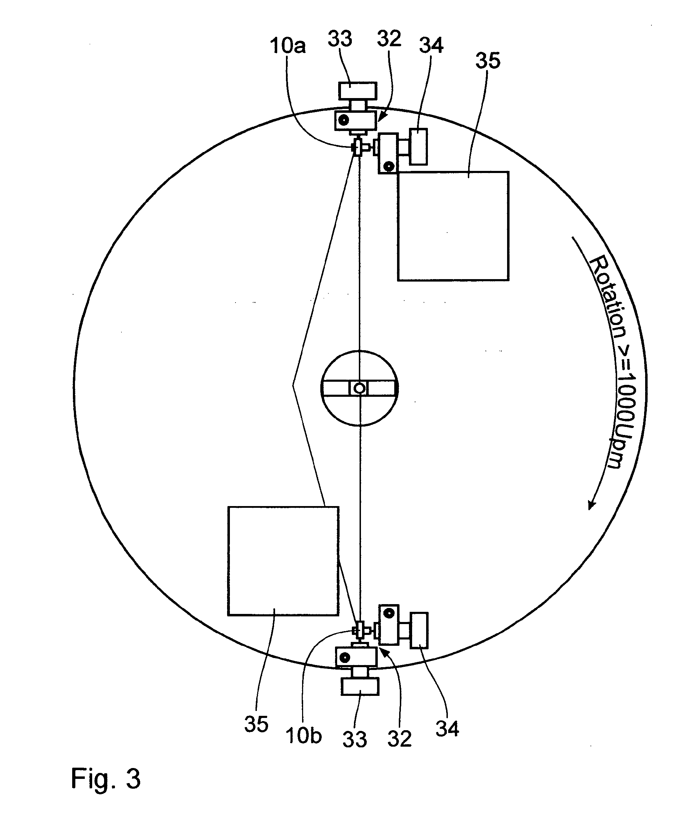

Bei der Ausführung nach Fig. 2 sind anstelle eines einzigen Umlenkspiegels 10 zwei zweite Umlenkspiegel 10a, 10b vorgesehen, die beabstandet zur Rotationsachse 8 und in ihrer Winkelposition in Bezug auf die Rotationsachse 8 um 180° zueinander versetzt angeordnet sind (vgl. Fig. 3). Der erste Umlenkspiegel 6 ist bei der Ausführung nach Fig. 2 als Dachkantenspiegel mit einem Dachkantenwinkel von 90° ausgeführt, wobei der Einfall-Bündelabschnitt 7 so auf eine Dachkante 31 des ersten Umlenkspiegels 6 trifft, dass eine in der Fig. 2 obere Hälfte des Einfall-Bündelabschnitts 7 um 90° nach oben und eine in der Fig. 2 untere Hälfte des Einfall-Bündelabschnitts 7 um 90° nach unten abgelenkt wird.

Diese Umlenkung ist so, dass beide zweiten Umlenkspiegel 10a, 10b über den jeweiligen Umlenkflächenabschnitt 9 des ersten Umlenkspiegels 6 jeweils von der ihnen zugeordneten Hälfte des Bündelquerschnitts des Einfall-Bündelabschnitts 7 beaufschlagt werden. Jeder der beiden Umlenkspiegel 10a, 10b hat eine Scan-Einrichtung 32, mit der eine oszillierende Scan-Verkippung der beiden zweiten Umlenkspiegel 10a, 10b um zwei zueinander senkrechte und in der xy-Ebene liegende Achsen x', y' jeweils um einen bestimmten Winkelbereich möglich ist. In der Momentanposition der zweiten Umlenkspiegel 10a, 10b, die in der Fig. 2 dargestellt ist, verläuft die x'-Achse parallel zur x-Achse und die y'-Achse parallel zur y-Achse des kartesischen x-y-z-Koordinatensystems der Laservorrichtung 1. Auch die zweite, also die y-Scaneinrichtung des Umlenkspiegels 10 steht mit der Erfassungs-/Steuereinheit 30 in Signalverbindung. Jede der beiden Scan-Einrichtungen 32 hat einen x'-Antriebsmotor 33 und einen y'-Antriebsmotor 34.

Die beiden Antriebe 33, 34 werden jeweils von einem Scannertreiber 35 angesteuert, der wiederum mit der Erfassungs-/Steuereinheit 30 in Signalverbindung steht. Über den Scannertreiber 35 sind unabhängige Verkippungen der zweiten Umlenkspiegel 10a, 10b um die x'-, y'-Achsen während der Rotation der Tragscheibe 14 um die Rotationsachse 8 möglich.

Verschiedene Arbeitsweisen bzw. Ausgestaltungen der Erfassungs-/Steuereinheit 30 zur Erzeugung dreidimensionaler Objekte bzw. von 3D-Effekten sind möglich: Die Erfassungs-/Steuereinheit 30 kann so ausgebildet sein, dass in einem Betriebsmodus der Laservorrichtung 1 die Scanbewegungen des mindestens einen Umlenkspiegels 10; 10a, 10b so mit seiner Rotationsbewegung um die Rotationsachse 8 synchronisiert sind, dass die Abweichung der Scanposition des zweiten Umlenkspiegels 10; 10a, 10b von der Scanposition des zweiten Umlenkspiegels 10; 10a, 10b dann, wenn dieser eine volle Umdrehung um die Rotationsachse 8 durchgeführt hat, einem vorgegebenen Abweichungs-Sollwert entspricht. Hierdurch sind stehende bzw. sich vorgegeben langsam veränderbare 3D-Objekte erzeugbar.

Bei der Laservorrichtung nach den Fig. 2 und 3 ist zudem ein Betriebsmodus der Erfassungs-/Steuereinheit 30 möglich, bei dem die Scanbewegungen der beiden Umlenkspiegel 10a, 10b so mit ihrer Rotationsbewegung synchronisiert sind, dass die Abweichung der Scanposition des einen zweiten Umlenkspiegels 10a von der Scanposition des anderen zweiten Umlenkspiegels 10b dann, wenn der zweite Umlenkspiegel 10a nach einer halben Umdrehung in der Winkelposition des anderen zweiten Umlenkspiegels 10b vorliegt, einen vorgegebenen Abweichungs-Sollwert entspricht. Auch hierdurch sind stehende bzw. sich vorgegeben langsam veränderbare 3D-Objekte und damit reizvolle 3D-Effekte erzeugbar.

## Patentansprüche

1. Laservorrichtung (1) zur Erzeugung dreidimensionaler Lichtobjekte in einem ein Streumedium enthaltenden Volumen
- mit einer Laserlichtquelle (4), die ein Lichtbündel (5) sichtbaren Lichts ausgibt,
- mit einem ersten Umlenkelement (6), das um eine Rotationsachse (8) drehantreibbar ist, die eine optische Umlenkfläche (9) des ersten Umlenkelements (6) durchtritt,
- wobei das ersten Umlenkelement (6) so angeordnet ist, dass die Rotationsachse (8) mit der Strahlrichtung eines Einfallbündelabschnitts (7) zusammenfällt, welches auf das erste Umlenkelement (6) trifft,
- mit mindestens einem zweiten, beabstandet zur Rotationsachse (8) so angeordneten Umlenkelement (10; 10a, 10b), dass es mit mindestens einem Umlenk-Bündelabschnitt (11) beaufschlagbar ist, welcher vom ersten Umlenkelement (6) zur Erzeugung eines Ausgabe-Bündelabschnitts (3) zur Erzeugung des 3D-Objektes umgelenkt wird,
- wobei das zweite Umlenkelement (10; 10a, 10b) eine mit einer Steuereinrichtung (30) zusammenarbeitende Scan-Einrichtung (33 bis 35) aufweist, mittels der das zweite Umlenkelement (10; 10a, 10b) oszillierend um mindestens eine erste Kippachse (y'; x', y') verkippbar ist.

2. Laservorrichtung nach Anspruch 1, **dadurch gekennzeichnet, dass** das erste (6) und das mindestens eine zweite (10; 10a, 10b) Umlenkelement auf einer drehantreibbaren Tragscheibe (14) angeordnet sind, deren Rotationssymmetrieachse mit der Rotationsachse (8) zusammenfällt.

3. Laservorrichtung nach Anspruch 2, **dadurch gekennzeichnet, dass** die Tragscheibe (14) eine zentrale Durchgangsöffnung (15) zur Durchführung des Einfall-Bündelabschnitts (7) aufweist.

4. Laservorrichtung nach einem der Ansprüche 1 bis 3, **gekennzeichnet durch** zwei zweite Umlenkelemente (10a, 10b), die in ihrer Winkelposition in Bezug auf die Rotationsachse (8) um 180° zueinander versetzt angeordnet sind, wobei die Anordnung der Umlenkelemente (10a, 10b) derart ist, dass beide zweiten Umlenkelemente (10a, 10b) von Umlenkflächenabschnitten des ersten Umlenkelements (6) beaufschlagt werden.

5. Laservorrichtung nach einem der Ansprüche 1 bis 4, **dadurch gekennzeichnet, dass** das mindestens eine zweite Umlenkelement (10; 10a, 10b) eine weitere mit der Steuereinrichtung (30) zusammenarbeitende Scan-Einrichtung aufweist, mittels der das zweite Umlenkelement (10; 10a, 10b) oszillierend um eine zweite Kippachse (x') verkippbar ist, die mit der ersten Kippachse (y') einen Winkel einschließt.

6. Laservorrichtung nach einem der Ansprüche 1 bis 5, **gekennzeichnet durch** mit der Steuereinrichtung (30) zusammenarbeitenden Positionsaufnehmer zur Ermittlung der Winkelposition des mindestens einen Umlenkelements (10; 10a, 10b).

7. Laservorrichtung nach Anspruch 6, **dadurch gekennzeichnet, dass** der Positionsaufnehmer im Bereich eines rotierenden und drehfest mit den Umlenkelementen (6, 10; 6, 10a, 10b) verbundenen Führungsrohrs (17) angeordnet ist, durch das der Einfall-Bündelabschnitt (7) geführt ist.

8. Laservorrichtung nach Anspruch 6 oder 7, **gekennzeichnet durch** eine Ausgestaltung der Steuereinrichtung (30) derart, dass in einem Betriebsmodus der Laservorrichtung (1) die Scanbewegungen des mindestens einen zweiten Umlenkelements (10; 10a, 10b) so mit seiner Rotationsbewegung synchronisiert sind, dass die Abweichung der Scanposition des zweiten Umlenkelements (10; 10a, 10b) von der Scanposition des zweiten Umlenkelements (10; 10a, 10b) dann, wenn das zweite Umlenkelement (10; 10a, 10b) eine volle Umdrehung um die Rotationsachse (8) durchgeführt hat, einem vorgegebenen Abweichungs-Sollwert entspricht.

9. Laservorrichtung nach Anspruch 6 oder 7 unter Rückbeziehung auf Anspruch 4 oder 5, **gekennzeichnet durch** eine Ausgestaltung der Steuereinrichtung (30) derart, dass in einem Betriebsmodus der Laservorrichtung (1) die Scanbewegungen der beiden zweiten Umlenkelemente (10a, 10b) so mit ihrer Rotationsbewegung synchronisiert sind, dass die Abweichung der Scanposition des einen zweiten Umlenkelements (10a) von der Scanposition des anderen zweiten Umlenkelements (10b) dann, wenn das eine zweite Umlenkelement (10a) nach einer halben Umdrehung in der Winkelposition des anderen zweiten Umlenkelements (10b) vorliegt, einem vorgegebenen Abweichungs-Sollwert entspricht.
